# EUROPÄISCHE PATENTANMELDUNG

(11) **EP 0 691 677 A2**
(43) Veröffentlichungstag der Anmeldung: **10.01.1996**
(21) Anmeldenummer: 95108812.9
(22) Anmeldetag: 08.06.1995
(51) Int. Cl.: H01L 21/306, G01L 9/00

(54) **Verfahren zur Erhöhung der lateralen Unterätzung einer strukturierten Schicht**

(30) Priorität: 08.07.1994 DE 4424015
(71) Anmelder: ANT Nachrichtentechnik GmbH, D-71522 Backnang (DE)
(72) Erfinder: Warth, Martin, D-71409 Schwaikheim (DE)

(57) **Zusammenfassung**

Es wird ein Verfahren zur Erhöhung der lateralen Unterätzung einer strukturierten Schicht (4, 5) auf einer Siliziumscheibe (7) angegeben, welches folgende Verfahrensschritte umfaßt:
1) Erzeugen einer thermischen Siliziumoxidschicht mit geringer Dicke auf der Siliziumscheibe,
2) Strukturieren der Siliziumoxidschicht,
3) Abscheiden von Polysilizium (oder amorphem Silizium) auf die bereichsweise beschichtete Siliziumscheibe,
4) Strukturieren des Polysiliziums in der Weise, daß Bereiche, auf denen die siliziumoxidschicht entfernt wurde, von Polysilizium bedeckt sind,
5) Oxidieren der oberen Schicht des Polysiliziums,
6) Abscheiden einer Schicht, die gegen siliziumätzende Ätzmittel resistent ist,
7) Strukturieren der gegen siliziumätzende Ätzmittel resistenten Schicht in der Weise, daß auf den Bereichen der Polysiliziumschicht Strukturen entstehen, die unterätzt werden sollen, und
8) Ätzen der Siliziumscheibe mit einem Mittel, das Silizium angreift.

## Beschreibung

Die vorliegende Erfindung betrifft ein Verfahren zur Erhöhung der lateralen Unterätzung einer strukturierten Schicht auf einer Siliziumscheibe.

In dem Artikel K.E. Petersen: "Silicon as a Mechanical Material", Proceedings of the IEEE, Vol. 70, No. 5, 1982, S. 423ff werden isotropes und anisotropes Ätzen von Siliziumscheiben und das Unterätzen von darauf aufgetragenen strukturierten Schichten offenbart. In den Figuren 5, 46 und 53 dieser Schrift sind weit überstehende Schichten, die durch anisotropes Ätzen erzeugt wurden, dargestellt.

In der DE 41 06 287 A1 ist ein Verfahren zum anisotropen Ätzen von monokristallinen Siliziumscheiben beschrieben, mit dem Strukturelemente, wie Membranen oder Durchgangsöffnungen, in dem Träger hergestellt werden können. Zur Erzeugung dieser Strukturelemente wird ein gezieltes Unterätzen einer Maskierschicht angewendet.

In der DE 43 20 062 A1 ist ein Verfahren zum Isolieren einzelner Elemente auf einem Halbleiterchip beschrieben, das sich für die Herstellung von Halbleiterspeicherschaltungen des CMOS-Typs eignet. Dieses Verfahren enthält u.a. folgende Verfahrensschritte:
1. thermisches Oxidieren der Oberfläche der Siliziumscheibe zur Bildung einer dünnen Siliziumoxidschicht auf der Oberfläche,
2. Abscheiden von Polysilizium auf der Siliziumoxidschicht, und
3. Abscheiden einer Siliziumnitridschicht auf dem Polysilizium.
Die Polysiliziumschicht wird zwischen die Siliziumoxidschicht und die Siliziumnitridschicht als eine die Oxidation verhindernde Schicht für einen aktiven Bereich eingefügt. Die Polysiliziumschicht vermindert zudem thermische Spannungen zwischen den Schichten, die während eines Hochtemperaturerwärmungszyklusses entstehen.

Die Aufgabe der vorliegenden Erfindung ist es, ein Verfahren anzugeben, mit dem sich unterätzte Strukturen größerer Ausdehnung herstellen lassen.

Diese Aufgabe wird erfindungsgemäß durch die Merkmale des Anspruchs 1 gelöst. Vorteilhafte Ausführungsformen gehen aus den Unteransprüchen hervor.

Bei dem erfindungsgemäßen Verfahren wird eine lokale Erhöhung der lateralen Unterätzung von einer gegen siliziumätzende Ätzmittel resistenten strukturierten Schicht, beispielsweise eine Siliziumnitridschicht, erzielt. Unter der strukturierten Schicht befindet sich eine Polysiliziumschicht, die durch das Ätzmittel sehr schnell aufgelöst wird. Durch die erhöhte Unterätzung lassen sich z.B. großflächige Brückenstrukturen, die vollständig ausgebildete V-Nuten überspannen, herstellen. Die strukturierte Schicht wird auch bei großflächigen Bereichen vollständig unterätzt.

Ausführungsbeispiele der Erfindung werden anhand der schematischen Zeichnungen erläutert.

Es zeigen:
Fig. 1 eine Siliziumscheibe mit aufgetragenen Schichten in einer Schnittdarstellung, und
Fig. 2 eine Siliziumscheibe mit unterätzten, großflächig strukturierten Schichten.

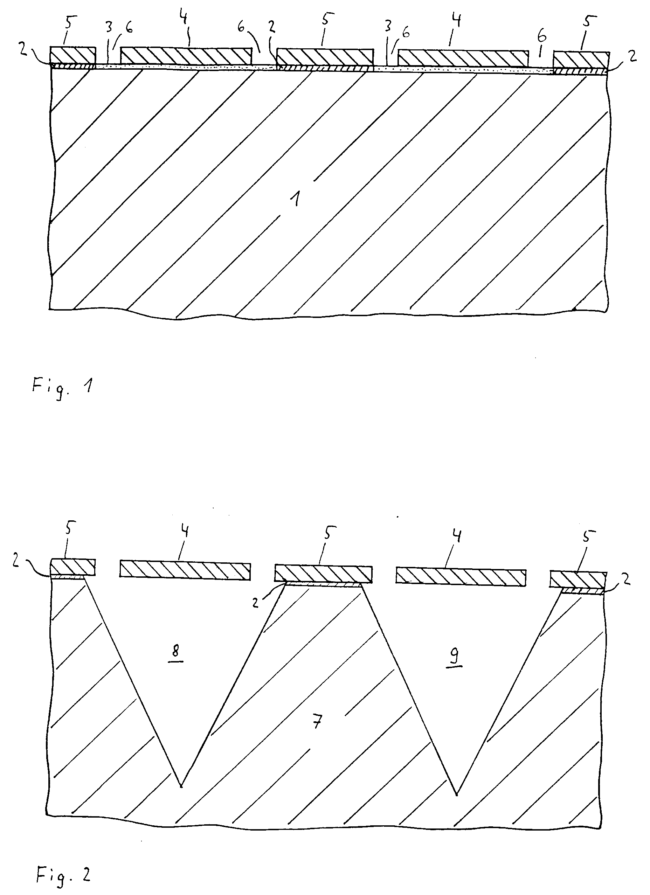

Zur Durchführung des Verfahrens wird in einem ersten Schritt die Oberfläche einer Siliziumscheibe 1 thermisch oxidiert, so daß eine Siliziumoxidschicht 2 geringer Dicke entsteht (Figur 1). Die Siliziumoxidschicht 2 wird anschließend in der Weise strukturiert, daß Bereiche der Siliziumscheibe 1, in denen später Ausnehmungen entstehen sollen, von der Siliziumoxidschicht 2 befreit sind.

In einem weiteren Schritt wird polykristallines Silizium 3 (Polysilizium) auf der Siliziumscheibe 1 abgeschieden. Verwendbar ist ebenfalls amorphes Silizium oder eine Metallschicht, die durch siliziumätzende Ätzmittel ätzbar ist. Geeignete Metalle hierfür sind z.B. Titan oder Aluminium. Im nächsten Schritt wird das Polysilizium 3 in der Weise strukturiert, daß die Bereiche der Siliziumscheibe 1, von denen die Siliziumoxidschicht in einem vorherigen Schritt entfernt wurde, ganz oder zumindest zum überwiegenden Teil mit Polysilizium 3 bedeckt bleiben. Das Polysilizium, das sich auf der Siliziumoxidschicht 2 befindet, wird entfernt. Die Oberfläche des Polysiliziums 3 wird anschließend oxidiert. Diese dient als Ätzstopschicht, wenn die nachfolgende Schicht strukturiert wird. Als nachfolgende Schicht wird eine Siliziumnitridschicht 4, 5 auf der Siliziumscheibe 1 abgeschieden. Anstatt der Siliziumnitridschicht 4, 5 kann auch eine andere Schicht, die gegen siliziumätzende Ätzmittel resistent ist, abgeschieden werden, z.B. eine Metallschicht aus Nickel, Gold, Platin oder Chrom.

Die Siliziumnitridschicht 4, 5 dient z.B. zur Herstellung von großflächigen, strukturierten Schichten, die eine V-Nut oder eine andere Ausnehmung überspannen. Durch mäanderförmige oder netzförmige Strukturen lassen sich auch elastische Brückenstrukturen herstellen. Die Siliziumnitridschicht 4, 5 wird hierfür dementsprechend strukturiert und mit Lücken 6 versehen.

Durch die Lücken 6 hindurch kann das Polysilizium 3 und die Siliziumscheibe 1 geätzt werden. Die oxidierte Oberfläche des Polysiliziums 3, die durch die Lücken 6 zugänglich ist, kann durch einen Ätzvorgang, z.B. mit Flußsäure (HF), entfernt werden. Zum Ätzen des Polysiliziums 3 und der Siliziumscheibe 1 können isotrope und anisotrope Ätzmittel verwendet werden.

In einer Siliziumscheibe 7 mit (100)-Oberflächenorientierung lassen sich durch anisotrope Ätzmittel beispielsweise V-Nuten 8, 9 erzeugen, siehe Fig. 2.

Die Seitenwände der V-Nuten 8, 9 stellen (111)-Oberflächen dar, die für anisotrope Ätzmittel eine sehr geringe Ätzrate aufweisen. Das Polysilizium 3 wird sowohl durch isotrope als auch durch anisotrope siliziumätzende Ätzmittel sehr schnell aufgelöst. Nach dem Auflösen des Polysiliziums 3 stehen die zur vollständigen Ausbildung der V-Nuten 8, 9 benötigten Oberflächen zur Verfügung. Auch großflächige Strukturen 4 (Fig. 2) werden hierdurch vollständig unterätzt.

## Patentansprüche

1. Verfahren zur Erhöhung der lateralen Unterätzung einer strukturierten Schicht auf einer Siliziumscheibe mit den folgenden Verfahrensschritten:
1) Erzeugen einer thermischen Siliziumoxidschicht geringer Dicke auf der Siliziumscheibe,
2) Strukturieren der Siliziumoxidschicht,
3) Abscheiden von Polysilizium oder amorphem Silizium oder einer anderen Schicht, die durch siliziumätzende Ätzmittel ätzbar ist, auf der bereichsweise beschichteten Siliziumscheibe,
4) Strukturieren des Polysiliziums in der Weise, daß Bereiche, auf denen die Siliziumoxidschicht entfernt wurde, von Polysilizium bedeckt sind.
5) Oxidieren der oberen Schicht des Polysiliziums,
6) Abscheiden einer Schicht, die gegen siliziumätzende Ätzmittel resistent ist,
7) Strukturieren der gegen siliziumätzende Ätzmittel resistenten Schicht in der Weise, daß auf den Bereichen der Polysiliziumschicht Strukturen entstehen, die unterätzt werden sollen, und
8) Ätzen der Siliziumscheibe mit einem Mittel, das Silizium angreift.

2. Verfahren nach Anspruch 1, dadurch gekennzeichnet, daß die oxidierte Schicht des Polysiliziums, die nicht von der gegen Silizium ätzende Ätzmittel resistenten Schicht bedeckt ist, entfernt wird.

3. Verfahren nach Anspruch 1 oder 2, dadurch gekennzeichnet, daß als eine gegen siliziumätzende Ätzmittel resistente Schicht eine Siliziumnitridschicht abgeschieden wird.

4. Verfahren nach Anspruch 1, 2 oder 3, dadurch gekennzeichnet, daß die Oberfläche der Siliziumscheibe derart gewählt wird, daß sie einer (100)-Ebene der Siliziumkristallstruktur entspricht.

5. Verfahren nach einem der vorhergehenden Ansprüche, dadurch gekennzeichnet, daß es zur Herstellung einer grabenüberspannenden Klemmstruktur verwendet wird.
